**Europäisches Patentamt**

**European Patent Office**

**Office européen des brevets**

(19)

(11) Veröffentlichungsnummer: **0 021 296**
**B1**

(12) **EUROPÄISCHE PATENTSCHRIFT**

(45) Veröffentlichungstag der Patentschrift:
**17.08.83**

(51) Int. Cl.³: **H 04 M 1/50,** G 06 F 1/02

(21) Anmeldenummer: **80103332.5**

(22) Anmeldetag: **14.06.80**

(54) **Tongenerator zur Erzeugung von Signalfrequenzen in einem MFV-Fernsprechapparat.**

(30) Priorität: **20.06.79 DE 2924752**

(43) Veröffentlichungstag der Anmeldung:
**07.01.81 Patentblatt 81/1**

(45) Bekanntmachung des Hinweises auf die Patenterteilung:
**17.08.83 Patentblatt 83/33**

(84) Benannte Vertragsstaaten:
**AT BE FR IT NL**

(56) Entgegenhaltungen:
**DE-A-2 137 999**
**DE-A-2 328 992**
**FR-A-2 188 360**
**ELECTRONIC COMPONENTS AND APPLICA-**
**TIONS, Band 1, Nr. 1, Oktober 1978, London, GB,**
**J. J. A. GEBOERS et al.: »Two-tone telephone**
**dialling«, Seiten 29—41**

(73) Patentinhaber: **Licentia Patent-Verwaltungs-GmbH,**
**Theodor-Stern-Kai 1, D-6000 Frankfurt/Main 70 (DE)**

(72) Erfinder: **Rall, Bernhard, Dipl.-Ing., Albecker Steige 67,**
**D-7900 Ulm (DE)**

(74) Vertreter: **Schickle, Gerhard, Dipl.-Ing. et al, Licentia**
**Patent-Verwaltungs-GmbH Theodor-Stern-Kai 1,**
**D-6000 Frankfurt/Main 70 (DE)**

## Tongenerator zur Erzeugung von Signalfrequenzen in einem MFV-Fernsprechapparat

Die Erfindung betrifft einen Tongenerator zur Erzeugung von Signalisierungsfrequenzen in einem MFV-Fernsprechapparat mit einem Quarzoszillator 1, einem an den Quarzoszillator 1 angeschlossenen ersten Frequenzteiler 2 mit festem Divisor, einem am ersten Frequenzteiler 2 angeschlossenen Frequenzteiler 3, 4 mit von einem Programmiernetzwerk 7 einstellbaren ganzzahligen Divisor zur Erzeugung von über das Programmiernetzwerk 7 ausgewählten Frequenzen und mit einem Digital/Analog-Umsetzer, der einen vierten Frequenzteiler 5 mit einem festen Divisor und ein an die Stufen des vierten Frequenzteilers 5 angeschlossenes Gewichtsnetzwerk 6 zur Bildung stufenförmiger Signale mit angenäherter Sinuswellenform enthält.

MFV-Fernsprechapparate arbeiten nach dem Mehrfrequenzcodewahlverfahren (MFV) und geben beim Drücken einer Wahlziffer jeweils zwei Signalisierungsfrequenzen ab, von denen die eine unter 1 kHz und die andere über 1 kHz liegt. Als Signalisierungsfrequenzen sind gemäß dem Com. XI des C.C.I.T.T. die Frequenzen 697, 770, 852 und 941 kHz und 1204, 1336, 1477 und 1633 Hz vorgesehen.

Die Frequenzgenauigkeit soll besser als 1,5% sein und der Pegel der Summe aller höheren Harmonischen soll um wenigstens 20 dB niedriger sein als der Pegel der Grundwelle.

Ein Tongenerator der eingangs genannten Art ist beispielsweise aus der DE-AS 2 328 992 bekannt. Er hat jedoch den Nachteil, daß er von einer speziellen Oszillatorfrequenz, nämlich 221,8 kHz ausgeht und somit spezielle Quarze erfordert. Der bekannte Tongenerator hat außerdem recht aufwendige Frequenzteiler und somit einen relativ hohen Stromverbrauch und sein Bewertungsnetzteil enthält zahlreiche Stromquellen, die bei kleinsten Störungen in dem das Gewichtsnetzwerk steuernden Frequenzteiler oder im Gewichtsnetzwerk selbst die Gefahr unzulässiger Oberwellen, insbesondere der zweiten Harmonischen verursachen.

Ein Tongenerator der eingangs genannten Art, der mit einem wirtschaftlich herstellbaren Quarz betrieben wird, ist aus der Zeitschrift »Electronic Components and Applications«, Vol. 1, Nr. 1, Oktober 1978, Seiten 29 bis 41, bekannt. Die Quarzfrequenz liegt über 4 MHz (4,78272 MHz) und wird von einem ersten, durch 12 teilenden Frequenzteiler zur besseren Verarbeitung herabgesetzt. Ferner wird hier die zu erzeugende Ausgangssinusspannung durch eine 14stufige Treppenkurve mit unterschiedlicher Stufenhöhe mittels 7 Stromquellen angenähert und zur exakten Frequenzerzeugung den Stufen unterschiedliche Längen gegeben.

Ein weiterer Tongenerator der eingangs genannten Art ist auch aus der DE-AS 2 500 059 bekannt. Der Frequenzteiler mit einstellbarem ganzzahligem Divisor wird durch einen Frequenzteiler mit festem ganzzahligem Divisor gebildet, der von einer von einem Programmiernetzwerk (Steuerstufe) steuerbaren Impulsunterdrückerstufe gespeist wird. Maßnahmen zur Stromreduzierung in den Teilerstufen sind den genannten Literaturstellen nicht entnehmbar.

Der Erfindung liegt die Aufgabe zugrunde, den Stand der Technik zu verbessern. Insbesondere soll der Stromverbrauch eines Tongenerators der eingangs genannten Art erheblich reduziert werden, so daß der Tongenerator auch bei längeren Teilnehmeranschlußleitungen über diese gespeist werden kann.

Die Aufgabe wird durch die im kennzeichnenden Teil des Anspruchs 1 angegebene Erfindung gelöst.

Durch die Verwendung einer Hilfskippstufe und eines zusätzlichen UND-Gliedes wird das zeitaufwendige Voreinstellen des Teilers, das üblicherweise mit der Umkippflanke der letzten Teilerstufe erfolgt, vermieden. Gibt die Hilfskippstufe eine logische »1« ab, so wird die UND-Schaltung vorbereitet und kann bei Erreichen eines vorgebbaren Zählerstandes des als Teiler verwendeten Zählers eine gewünschte Voreinstellung bewirken. Da dies praktisch ohne Zeitverlust erfolgt und der Zähler während des Voreinstellens weiterzählen kann, verringern sich die Anforderungen an die Durchlaufzeit der Zählimpulse im Teiler erheblich, so daß die Teilerstufen mit geringem Strom betrieben werden können. Die Stromaufnahme des Frequenzteilers ist dadurch gegenüber einem nach dem Stand der Technik aufgebauten Frequenzteiler um den Faktor 3 niedriger.

Vorteilhafte Weiterbildungen und Ausgestaltungen der Erfindung sind in den Unteransprüchen angegeben.

Die Ausbildung des Frequenzteilers nach Anspruch 2 hat den Vorteil, daß durch den zweiten Frequenzteiler mit einen zwischen 3 und 4 umschaltbaren Divisor die vom Frequenzteiler mit einstellbarem ganzzahligen Divisor erzeugten Frequenzen mit einer Genauigkeit von besser als 0,1% auf den Sollwert eingestellt werden können. Obwohl nach den C.C.I.T.T.-Vorschriften für die Signalisierungsfrequenzen eine Toleranz von ± 1,5% zugelassen sind, ist es für die sichere Erkennung der Signalisierungsfrequenzen im Sprachfrequenzband des Fernsprechapparates durch integrierte, nach dem Korrelationsprinzip arbeitende Tonwahlempfänger günstiger, die Frequenztoleranzen auf unter 0,2% zu begrenzen.

Anspruch 3 gibt eine vorteilhafte Schaltungsanordnung für den auf die Divisoren 3 und 4 umschaltbaren Frequenzteiler.

Die Ausgestaltung der Erfindung nach Anspruch 4 ermöglicht eine einfache Einstellung des Divisors für den zweiten und dritten Frequenzteiler durch das Programmiernetzwerk zur Erzeugung einer gewünschten Signalisierungsfrequenz.

Während eines Zählzyklus des dritten Frequenzteilers wird die Periode des zweiten Frequenzteilers mehrfach durchlaufen. Jedoch nur ein einziges Mal innerhalb eines Zählzyklus des dritten Frequenzteilers soll beim Vorliegen eines Umschaltsignals der Divisor des zweiten Frequenzteilers umgeschaltet werden. Eine hierfür einfache Lösung gibt das Merkmal des Anspruchs 5, indem die Auswirkung des Umschaltsignals von der Stellung der Hilfskippstufe abhängig gemacht wird.

Es ist ein weiterer Vorteil der Erfindung, daß sie gemäß Anspruch 6 mit einem Gewichtsnetzwerk arbeitet, das lediglich 3 Stromquellen aufweist und welches durch die Wahl der Teilströme eine vorteilhafte Unterdrückung der Oberwellen gestattet. Selbst bei fertigungsbedingter Ungenauigkeit der einzelnen Teilströme können bei dieser Art der Bildung stufenförmiger Signale mit angenäherter Sinuswellenform niemals zweite Oberwellen entstehen, die besonders als Störfrequenzen allein oder in Mischprodukten den Wahltonempfang stören. In vorteilhafter Weise sind die Stufen des stufenförmigen Signals so aus Einzelströmen zusammengesetzt, daß die Stufenhöhen oberhalb und unterhalb des Gleichstrommittelwertes des sinusförmigen Signals durch die gleichen Stromquellen gebildet werden und dadurch stets deckungsgleiche Sinuswellen entstehen. Aus diesen Gründen wird das stufenförmige Signal mittels eines durch 12 teilenden Frequenzteilers aus 12 Stufen zusammengesetzt. Die übrigen Frequenzteiler sind an die Taktfrequenz dieses Frequenzteilers und an die Impulsoszillatorfrequenz anzupassen. Die Erfindung zeigt eine Lösung, diese Anpassung mit möglichst wenig Strom erfordernden Kippstufen auszuführen.

Die Erfindung wird nun anhand eines Ausführungsbeispiels und Zeichnungen näher erläutert. Es zeigt

Fig. 1 Blockschaltbild eines Tongenerators,

Fig. 2 Schaltbild des mit einem auf die Divisoren 3 und 4 umschaltbaren zweiten Frequenzteilers,

Fig. 3 Schaltbild zur Erläuterung des Schaltbildes nach Fig. 2,

Fig. 4 Schaltbild des dritten, auf beliebige Divisoren einstellbaren Frequenzteilers,

Fig. 5 Schaltbild eines Modulo-M-Zählers mit extrem niedrigem Stromverbrauch,

Fig. 6 Aufbau des sinusförmigen Stufensignals,

Fig. 7 Stufensignal bei einem fehlerhaften Stromgenerator,

Fig. 8 Prinzipschaltbild des Programmiernetzwerkes.

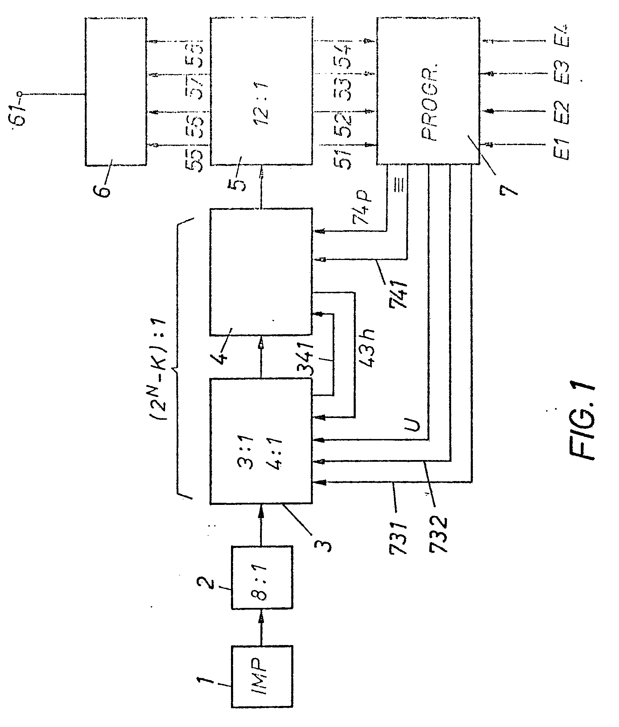

Fig. 1 zeigt die Schaltung eines Tongenerators, wie sie zur Erzeugung von Signalisierungsfrequenzen in einem MFV-Fernsprechapparat verwendet werden kann. Sie umfaßt einen Impulsoszillator 1, einen an dem Impulsoszillator 1 angeschlossenen ersten Frequenzteiler 2, einen zweiten und dritten Zähler 3 und 4 mit von einem Programmiernetzwerk 7 einstellbaren ganzzahligem Divisor zur Erzeugung der ausgewählten Signalisierungsfrequenz aus der Impulsoszillatorfrequenz. An dem Frequenzteiler ist ein Digital/Analog-Umsetzer angeschlossen, der einen konstanten, durch 12 teilenden vierten Frequenzteiler 5 enthält und ein an die Stufen des vierten Frequenzteilers 5 angeschlossenes Gewichtsnetzwerk 6 zur Bildung stufenförmiger Signale mit angenäherter Sinuswellenform, d. h. die Stufenhöhen sind so gewählt, daß die stufenförmigen Sinussignale theoretisch keine Oberwellen bis zur 11. Harmonischen enthalten.

In vorteilhafter Weise arbeitet der Impulsoszillator 1 mit einer Frequenz von 4,1911 MHz, also einer Frequenz, mit der die meisten 4,194303-MHz-Uhrenquarze in Serienresonanz ohne zusätzlichen Kondensator schwingen.

Um mit niedrigen Verlustleistungen und insbesondere niedrigem Betriebsstrom auszukommen, ist die Schaltung in der integrierten Injektionslogik (I²L) ausgelegt.

Für eine Teilerstufe läßt sich eine Grenzfrequenz für die Arbeitsgeschwindigkeit angeben, oberhalb der sie nicht mehr anspricht oder falsche Teilungsergebnisse liefert. In der integrierten Injektionslogik ist diese Grenzfrequenz in weiten Bereichen proportional zum Injektionsstrom, weil dieser als Umladestrom für die Sperrschichtkapazitäten auftritt und damit ihre Umladegeschwindigkeit bestimmt.

Um nun zu niedrigen Betriebsströmen zu kommen, wurde als erster Schritt zwischen den Impulsoszillator 1 und den Frequenzteilern 3 und 4, welche mit einstellbarem ganzzahligem Divisor arbeiten, ein durch 8 teilender Frequenzteiler 2 geschaltet. Die Injektionsströme der Transistoren der Kippstufe des durch 8 teilenden Frequenzteilers 2 sind so abgestuft, daß Kippstufen einer der Kippfrequenz proportionalen Injektionsstrom erhalten.

Der Frequenzteiler mit einstellbarem ganzzahligem Divisor besteht aus einem zweiten zwischen den Divisoren 3 und 4 durch eine Umschaltleitung U umschaltbaren Frequenzteiler 3 und einem dritten Frequenzteiler 4. Beide Frequenzteiler werden vom Programmiernetzwerk 7 gesteuert.

Der Frequenzteiler mit einstellbarem ganzzahligem Divisor hat die Aufgabe, die Ausgangsfrequenz 523 887,5 Hz des durch 8 teilenden Frequenzteilers 2 auf die 12fache Sollfrequenz herunterzuteilen. Sein Divisor D muß z. B. für eine Sollfrequenz von 697 Hz sein:

$$D = 523\,887{,}5\ \text{Hz}/(12 \cdot 697\ \text{Hz}) = 62{,}636$$

Der Divisor liegt folglich zwischen 62 und 63. Von den 12 Stufen des sinusförmigen Treppenstufensignals müssen also einige Stufen länger als 62 Takte sein. Da 0,636 ungefähr $=8/12$ ist,

3

müssen 8 Stufen 63 Takte und die restlichen 4 Stufen 62 Takte umfassen.

Allgemein ist:

$$A + B/12 = ((12 - B) A + B (A + 1))/12$$

wobei A der ganzzahlige Anteil des Divisors und B der ganzzahlige Anteil des gebrochenen Divisors in 12tel ist. Für (12 − B) Stufen der sinusförmigen Treppenkurve müssen die beiden Frequenzteiler 3 und 4 folglich durch A und für B Stufen durch (A + 1) dividieren.

Bei dieser Methode erhält man für die zu erzeugenden Tonfrequenzen fs des MFV-Systems folgende Divisoren und Abweichungen $\Delta f/fs$ in Prozent von der Sollfrequenz:

Tabelle 1

| fs | A | B | $\Delta f/fs$ |
|---|---|---|---|
| 697 Hz | 62 | 8 | −0,05% |
| 770 Hz | 56 | 8 | +0,05% |
| 852 Hz | 51 | 3 | −0,02% |
| 941 Hz | 46 | 5 | −0,05% |
| 1209 Hz | 36 | 2 | +0,07% |
| 1336 Hz | 32 | 8 | +0,03% |
| 1477 Hz | 29 | 7 | −0,09% |
| 1633 Hz | 26 | 9 | −0,06% |

Das um 1 unterschiedliche Teilungsverhältnis wird nun in vorteilhafter Weise ohne erheblichen Aufwand dadurch erreicht, daß der zweite Teiler 3 ein von 3 auf 4 umsteuerbares Teilerverhältnis hat.

Beispielsweise wird er für den Divisor 62,636 mit A = 62 und B = 8 so gesteuert, daß er bei B = 8 möglichst gleichmäßig über der sinusförmigen Treppenkurve verteilten Stufen durch 4 und bei den restlichen 12 − B = 4 Stufen durch 3 dividiert.

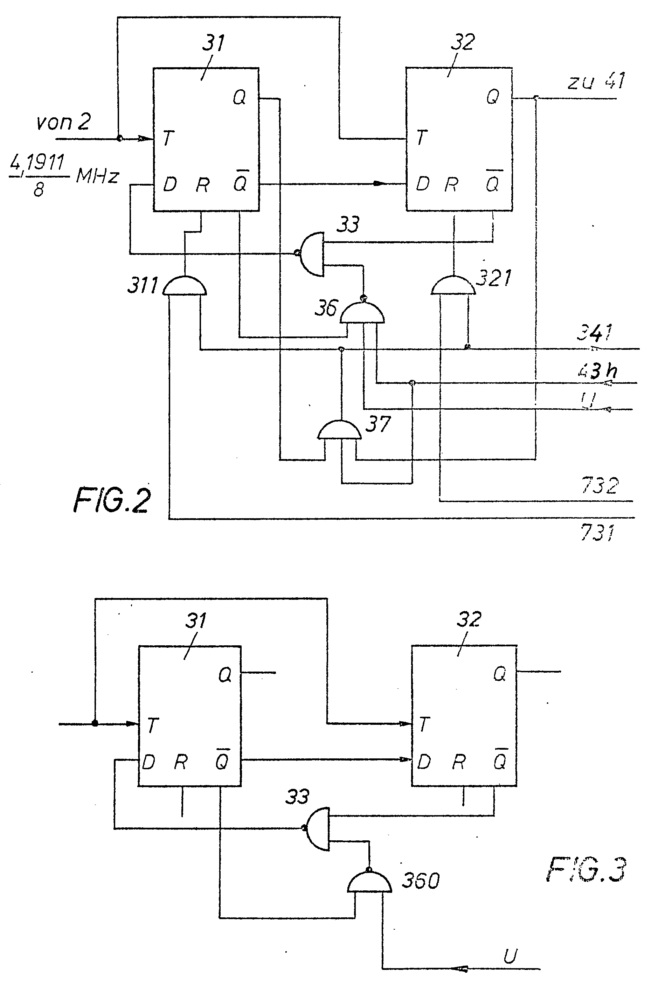

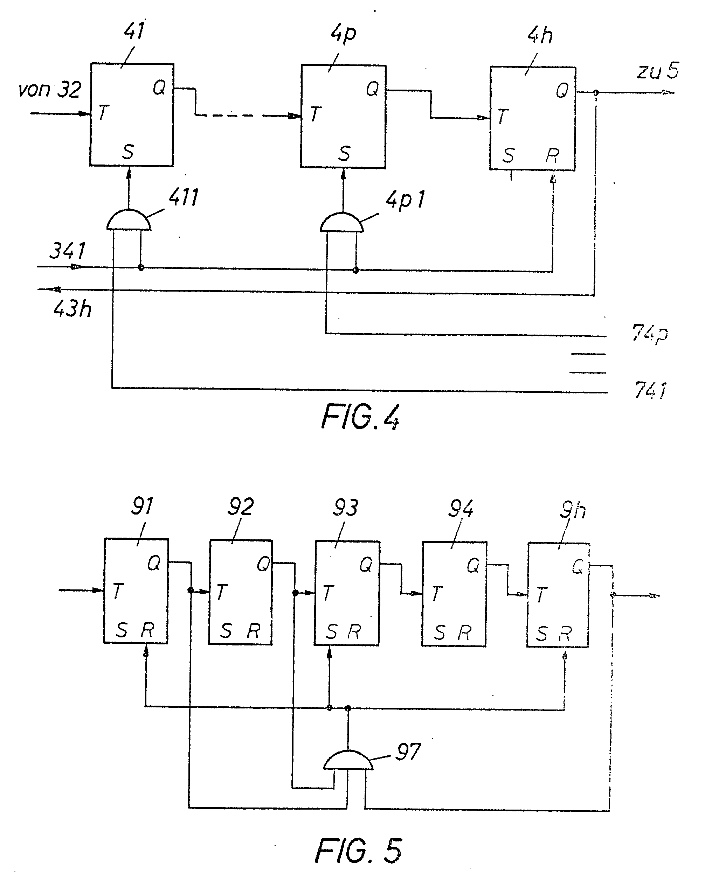

Der Frequenzteiler 3 ist in Fig. 2 ausführlich dargestellt und soll zunächst anhand der Fig. 3 näher erläutert werden.

Wie Fig. 3 zeigt, besteht der zweite Frequenzteiler aus 2 aufeinanderfolgenden bistabilen Kippstufen 31 und 32 mit je einem Bedingungseingang D. Derartige Kippstufen werden auch als D-Flip-Flop bezeichnet. Der D-Eingang des zweiten Flip-Flops 32 ist mit dem invertierenden Ausgang $\overline{Q}$ des ersten Flip-Flops 31 verbunden. Ebenfalls miteinander verbunden sind die beiden mit T bezeichneten Takteingänge der Flip-Flops.

Zwischen dem D-Eingang des ersten Flip-Flops 31 und dem invertierenden Ausgang des zweiten Flip-Flop 32 ist ein erstes NAND-Glied 33 geschaltet, dessen Ausgang mit dem D-Eingang des ersten Flip-Flops 31 und dessen erster Eingang mit dem invertierenden Ausgang des zweiten Flip-Flops 32 verbunden ist. Zwischen dem invertierenden Ausgang des ersten Flip-Flops 31 und dem ersten NAND-Glied 33 ist ein zweites NAND-Glied 360 geschaltet, dessen Ausgang mit dem zweiten Eingang des ersten NAND-Gliedes 33, dessen erster Eingang mit dem invertierenden Ausgang des ersten Flip-Flops 31 und dessen zweiter Eingang mit der Umschaltleitung U verbunden ist.

Die Tabelle 2 zeigt, daß je nach Pegel der Umschaltleitung U der Frequenzteiler, falls U = 1 (hoher Pegel) nach 3 Eingangstakten und, falls U = 0 (niedriger Pegel) nach 4 Eingangstakten wieder den Ausgangszustand erreicht und damit in Abhängigkeit vom Pegel der Umschaltleitung U entweder durch 3 oder durch 4 dividiert.

Tabelle 2

| U | 31 | 32 |
|---|---|---|
| 1 | 1 | 1 |
| 1 | 1 | 0 |
| 1 | 0 | 0 |
| 1 | 1 | 1 |
| 0 | 1 | 1 |
| 0 | 1 | 0 |
| 0 | 0 | 0 |
| 0 | 0 | 1 |
| 0 | 1 | 1 |

Wie Fig. 2 zeigt, ist dort die Schaltung nach Fig. 3 enthalten, jedoch mit einigen Zusatzelementen. So entspricht dem NAND-Glied 360 der Fig. 3 in Fig. 2 das NAND-Glied 36. Jedoch hat das NAND-Glied 36 insgesamt 3 Eingänge, so daß hier die Umschaltung des Frequenzteilers auf den Divisor 3 nur dann erfolgt, wenn die zum 3. Eingang des NAND-Gliedes 36 führende Leitung 43h, die, wie der Fig. 4 zu entnehmen ist, am Ausgang einer Hilfskippstufe 4h angeschlossen ist, gemeinsam mit der Umschalteleitung U einen hohen Pegel aufweist.

Die weiteren in Fig. 2 dargestellten UND-Glieder 311 und 321 dienen zum Voreinstellen des zweiten Frequenzteilers 3 nach weiteren Kriterien, die im folgenden in Verbindung mit dem dritten Frequenzteiler 4 erläutert werden.

Üblicherweise werden Frequenzteiler mit einstellbaren Divisoren so realisiert, daß beim Kippen der letzten Kippstufe der Teilerkette ($11111 \rightarrow 00000$) einzelne Kippstufen auf einen Wert K voreingestellt werden, von dem dann wieder bis zum Höchstwert des Zählers $2^N$ gezählt wird, so daß die Zählperiode $2^N - K$ ist. Bevor der nächste Eingangsimpuls am Eingang der Kette erscheinen darf, muß der ganze Voreinstellvorgang einschließlich des Durchlaufs des Signals durch alle Kippstufen beendet sein. Das erfordert schnelle Kippstufen mit hohem Stromverbrauch.

Der erfindungsgemäße Frequenzteiler mit einstellbarem ganzzahligem Divisor ist in Fig. 4 in Verbindung mit Fig. 2 dargestellt. Er besteht aus N bistabilen Kippstufen 41, 42, . . ., 4p sowie aus den Kippstufen 31 und 32 der Fig. 2 und enthält als letzte Stufe eine Hilfskippstufe 4h.

Der Ausgang der Hilfskippstufe 4h ist über Leitung 43h mit einem ersten Eingang eines UND-Gliedes 37 (Fig. 2) verbunden. Mindestens ein weiterer Eingang des UND-Gliedes 37 ist an dem Ausgang einer der Hilfskippstufe 4h vorangehenden Teilerstufe — im Ausführungsbeispiel sind das die nichtinvertierenden Q-Ausgänge der bistabilen Kippstufen 31 und 32 der Fig. 2 — angeschlossen.

Der Ausgang des UND-Gliedes 37 ist über Leitung 341 mit dem Reset-Eingang der Hilfskippstufe 4h (Fig. 4) und mindestens mit dem Set- oder Reset-Eingang einer der Hilfskippstufe 4h vorausgehenden Teilerstufe verbunden. Im Ausführungsbeispiel sind dies die Reset-Eingänge der Kippstufen 31 und 32 der Fig. 2 und die Set-Eingänge der Kippstufen 41 und 4p. Weitere Anschlüsse an Set- oder Reset-Eingängen wurden in Fig. 4 zur besseren Übersicht nicht dargestellt.

Zwischen dem UND-Glied 37 und den zu Set- oder Reset-Eingängen vorangehender Teilerstufen führenden Leitungen sind weitere UND-Glieder 311, 321, 411, . . ., 4p1 geschaltet, deren zweite Eingänge über die Leitungen 731, 732 bzw. 741, . . ., 74p mit Ausgängen des Programmiernetzwerkes 7 verbunden sind.

Zur Erläuterung der Funktion des Frequenzteilers mit einstellbarem ganzzahligem Divisor wurde das vorteilhafte Schaltungsprinzip in Fig. 5 vereinfacht dargestellt. Die Schaltung der Fig. 5 entspricht im Prinzip der in den Fig. 2 und 4 dargestellten. Die den bistabilen Kippstufen 41 bis 4h entsprechenden Kippstufen sind hier mit 91 bis 94 bezeichnet. Die Stufe 9h entspricht der Hilfskippstufe 4h. Deren Ausgang führt u. a. zum UND-Glied 97, welches eine dem UND-Glied 37 in Fig. 2 entsprechende Funktion ausführt.

Jeder Q-Ausgang einer Kippstufe 91 bis 94 ist folglich mit dem Takteingang T der ihr folgenden Kippstufe verbunden, wobei Stufe 94 den Takteingang der Hilfskippstufe 9h steuert. Außer dem Q-Ausgang der Stufe 9h sind in Fig. 5 noch die Q-Ausgänge der Stufen 91 und 92 mit den Eingängen des UND-Gliedes 97 verbunden.

Der Ausgang des UND-Gliedes 97 ist an den jeweiligen Reset-Eingang der Stufen 91 und 9h und an den Set-Eingang der Stufe 93 angeschlossen. Eine logische »1« an den Q-Ausgängen der Stufen 91, 92 und 9h verursacht folglich eine logische »1« am Ausgang des UND-Gliedes 97 und setzt damit die Q-Ausgänge der Stufen 91 und 9h auf »0« und der Stufe 93 auf »1«.

Bei dem Frequenzteiler wird also nicht der Ausgangsimpuls der Stufe 94 (Q-Ausgang) zum Voreinstellen der Stufen 91 und 93 verwendet, sondern der Ausgangsimpuls der Stufe 94 setzt die Hilfskippstufe 9h auf Q = »1«. Dadurch wird das UND-Glied 97 vorbereitet und gibt erst beim Erreichen der Signalkombination Q = »1« der Stufen 91 und 92 ein Ausgangssignal zum Voreinstellen der Stufen 91 und 93 ab. Gleichzeitig setzt dieses Ausgangssignal den Ausgang der Stufe 9h wieder auf »0«, so daß der Ausgang des UND-Gliedes 97 wieder auf »0« geht und damit die Voreinstellung beendet.

In Tabelle 3 sind die Pegel der einzelnen Stufen für eine schnelle Eingangstaktimpulsfolge aufgelistet. In der ersten Spalte der Tabelle ist die Nummer des Eingangstaktimpulses (mit Taktimpulse bezeichnet) der Kippstufe 91 aufgeführt. Die weiteren Spalten zeigen die logischen Pegel der Stufen 91 bis 94 und der Hilfskippstufe 9h an ihren Q-Ausgängen an. Ein Wechsel eines logischen Signals von »1« auf »0« bewirkt ein Umkippen der von diesem Signal gesteuerten Kippstufe. Ein Wechsel von »0« auf »1« bleibt ohne Folgen.

Tabelle 3

| Taktimpuls Nr. | Stufe | | | | |
|---|---|---|---|---|---|
| | 91 | 92 | 93 | 94 | 95 |
| | 1 | 1 | 1 | 1 | 0 |
| 1 | 0 | 1 | 1 | 1 | 0 |
| 2 | 1 | 0 | 0 | 1 | 0 |
| 3 | 0 | 1 | 0 | 0 | 1 |
| 4 | (1 | 1 | 0 | 0 | 1) |
| | 0 | 1 | 1 | 0 | 0 |
| 5 | 1 | 1 | 1 | 0 | 0 |
| 6 | 0 | 1 | 1 | 0 | 0 |
| 7 | 1 | 0 | 0 | 1 | 0 |
| 8 | 0 | 1 | 0 | 1 | 0 |
| 9 | 1 | 1 | 0 | 1 | 0 |
| 10 | 0 | 1 | 0 | 1 | 0 |
| 11 | 1 | 0 | 1 | 1 | 0 |
| 12 | 0 | 1 | 1 | 1 | 0 |
| 13 | 1 | 1 | 1 | 1 | 0 |
| 14 | 0 | 1 | 1 | 1 | 0 wie Nr. 1 |

In der Ausgangsstellung haben gemäß Tabelle 3, Zeile 1, sämtliche Stufen 91 bis 94 eine logische »1« am Q-Ausgang. Der nächste Taktimpuls am Eingang der Stufe 91, in der Tabelle 3 mit Nr. 1 bezeichnet, kippt die Stufe 91 auf »0«. Dadurch gehen auch die nachfolgenden Stufen 92 bis 94, wie aus der in Fig. 5 gezeigten Schaltung folgt, jeweils über ihre Takteingänge T von der vorhergehenden Stufe gesteuert, auf Q — »0« und der Wechsel der Stufe 94 von Q = »1« auf »0« steuert die Stufe 9h auf »1«.

Bei sehr schnellen Kippstufen würde dieses Umkippen nach dem ersten Eingangstaktimpuls abgeschlossen sein, so daß die Stufen 91 bis 96 auf »0« und Stufe 9h auf »1« noch vor dem Eintreffen des zweiten Eingangstaktimpulses angelangt wären.

Infolge der Trägheit der verwendeten Kippstufen erfordert diese Einstellung jedoch eine bestimmte Zeit. Es werde angenommen, daß diese Zeit so lange dauert, daß die Stufe 91 bereits den dritten Eingangstaktimpuls erhalten hat und die Stufe 91 bereits wieder über »1« auf »0« und dadurch Stufe 92 von »0« auf »1« gewechselt hat.

Nachdem während der drei Eingangstaktimpulse die Stufe 9h durch den Wechsel der Stufe 94 von »1« auf »0« den Pegel »1« erreicht hat, ist das UND-Glied 97 in Fig. 5 vorbereitet. Wenn es also an seinen beiden anderen Eingängen ebenfalls eine logische »1« erhält, schaltet sein Ausgang von »0« auf »1«. Beim vierten Eingangstaktimpuls ist dieser Zustand erreicht, da nun auch die Stufen 91 und 92 den Pegel »1« angenommen haben. Über die Set- bzw. Reset-Eingänge stellt nun das UND-Glied 97 die Stufen 91 und 9h auf »0« und die Stufe 93 auf »1«.

Die kurzzeitig eingenommene Einstellung der Stufen, die durch die Voreinstellung bewirkt wurde, ist in Tabelle 3 in Klammern gesetzt und die neue Einstellung in der nächsten Zeile der Tabelle 3 angegeben. Diese Neueinstellung erfolgt so schnell, daß beim Eingangstaktimpuls Nr. 5 die Stufe 91 wieder auf »1« wechseln kann.

Taktimpuls 6 würde ohne Trägheit der Kippstufen die Stufen 91 bis 93 auf »0« und die Stufe 94 auf »1« stellen. Dies erfolgt infolge ihrer Trägheit jedoch erst nach einer Zeit, in der Stufe 91 bereits durch den siebten Eingangstaktimpuls wieder auf »1« gestellt ist.

Während also die letzten Stufen des Teilers noch am Umkippen sind, befinden sich die ersten Stufen bereits wieder in stabiler Lage und können weitere Eingangstaktimpulse verarbeiten, wie dies für die Eingangstaktimpulse 8 bis 12 in Tabelle 3 gezeigt ist.

Beim Eingangstaktimpuls Nr. 13 hat der Zähler wieder seine Ausgangsstellung (vgl. Zeile 1 in Tabelle 1) erreicht und der Zählzyklus wiederholt sich von vorne in der bereits angegebenen Weise.

Wie der Tabelle 3 entnommen werden kann, teilt der im Beispiel der Fig. 5 angegebene Frequenzteiler eine an seinem Eingang angelegte Taktimpulsfolge durch 13. Da bei einem Frequenzteiler gemäß der Erfindung nicht der Ausgangsimpuls der Kippstufe 94 zum Voreinstellen verwendet wird sondern hierfür eine Hilfskippstufe und eine UND-Schaltung zusätzlich herangezogen wird, kann der Frequenzteiler mit langsamen und daher wenig Strom verbrauchenden Kippstufen betriebssicher aufgebaut werden.

Gegenüber Zählschaltungen nach dem Stand der Technik (ohne UND-Glied und Hilfskippstufe) konnte durch das in Fig. 5 gezeigte erfindungsgemäße Prinzip der Stromverbrauch um etwa den Faktor 3 des Zählers und damit des Teilers verringert werden.

In Fig. 2 entspricht dem UND-Glied 37 das UND-Glied 97 und in Fig. 4 der Hilfskippstufe 4h die Hilfskippstufe 9h. Die Reset- und Set-Eingänge des UND-Gliedes 37 werden jedoch in Fig. 2 über UND-Glieder 311, 321 und in Fig. 4 über die UND-Glieder 411, . . ., 4p1 den jeweiligen Kippstufen zugeführt. Die zweiten Eingänge dieser UND-Glieder sind mit dem Programmiernetzwerk 7 über die Steuerleitungen 731, 732 (Fig. 2) und 741, . . ., 74p (Fig. 4) verbunden, um den jeweils gewünschten Divisor über diese Leitungen einzustellen.

Tabelle 4 zeigt nun die wesentlichsten Vorgänge in den Teilerstufen 31, 32, 41 und 4p in Abhängigkeit von der Stellung der Hilfskippstufe 4h und dem Signal auf der Umschaltleitung U (Umschaltsignal) für einige aufeinanderfolgende mit laufender Nummer versehene Eingangstakte der Stufen 3 und 32. Die Teilerstufen 42 bis 4(p − 1) sind für diese Betrachtung nicht wesentlich und wurden daher in der Tabelle nicht weiter berücksichtigt.

Tabelle 4

| Nr. | 31 | 32 | 41 | | 4p | 4h | U |
|---|---|---|---|---|---|---|---|
| 1 | 1 | 1 | 1 | ... | 1 | 0 | 1 |
| 2 | 1 | 0 | 0 | | 1 | 0 | 1 |
| 3 | 0 | 0 | 0 | | 0 | 1 | 1 |
| 4 | (1 | 1 | 0 | | 0 | 1) | 1 |
|   | 1 | 0 | 1 | | 1 | 0 | |
| 11 | 1 | 1 | 1 | ... | 1 | 0 | 0 |
| 12 | 1 | 0 | 0 | | 1 | 0 | 0 |
| 13 | 0 | 0 | 0 | | 0 | 1 | 0 |
| 14 | 0 | 1 | 0 | | 0 | 1 | 0 |
| 15 | (1 | 1 | 0 | | 0 | 1) | 0 |
|   | 1 | 0 | 1 | ... | 1 | 0 | 0 |
| 16 | 0 | 0 | 1 | | 1 | 0 | 0 |
| 17 | 0 | 1 | 1 | | 1 | 0 | 0 |
| 18 | 1 | 1 | 1 | | 1 | 0 | 0 |
| 19 | 1 | 0 | 0 | 1... | 1 | 0 | 0 |
| 20 | 0 | 0 | 1 | 1... | 1 | 0 | 0 |

Es wird angenommen, daß zunächst beim Takt Nr. 1 alle Teilerstufen ein der logischen »1« entsprechendes Signal an ihren Q-Ausgängen haben. Beim Takt Nr. 2 hat Stufe 32, wie bereits zu Tabelle 2 erläutert, von »1« nach »0« gewechselt und dieser Wechsel veranlaßt die folgenden Stufen 41 bis 4p nacheinander auf »0« zu kippen. Wenn die Stufe 4p auf »0« kippt, steuert sie die Hilfskippstufe 4h auf »1« und damit in Vorbereitungsstellung für das UND-Glied 37 in Fig. 2.

Inzwischen haben die Stufen 31 und 32 bereits den Takt Nr. 2 verarbeitet, so daß beim Takt Nr. 3, wenn die Stufen 31 und 32 das Signal »0« annehmen, das UND-Glied 36 in Fig. 2 tätig wird. Diesem UND-Glied 36 wird ja das Umschaltsignal U, das Hilfskippstufensignal 43h der Stufe 4h und von der Stufe 31 bei $Q=0$ das Signal $\bar{Q}=1$ zugeführt. Das UND-Glied 36 kann folglich rechtzeitig ein Signal abgeben, welches bestimmt, ob bei $Q=0$ der Stufe 31 der zweite Frequenzteiler 3 bis 3 oder bis 4 zählt.

Da an den Eingängen des UND-Gliedes 33 die Signale diesmal unterschiedliche Pegel aufweisen, liegt an beiden D-Eingängen der Stufen 31 und 32 eine »1«, so daß der Eingangstakt Nr. 4 die Stufen 31 und 32 an den Q-Ausgängen auf »1« setzt. Damit ist aber nun das UND-Glied 37 an sämtlichen 3 Eingängen mit »1« angesteuert und über die Voreinstelleitung 341 werden gemäß den Steuersignalen des Programmiernetzwerkes 7 die Stufen 31 bis 4p voreingestellt, sowie die Hilfskippstufen 4h auf »0« gesetzt, wie bereits zu Tabelle 3 erläutert. Die auf Takt Nr. 4 folgende Zeile zeigt den Zustand der Stufen 31 bis 4h nach dieser Einstellung. Die Frequenzteiler 3 und 4 zählen nun weiter, bis wieder der unter Takt Nr. 1 angegebene Zustand erreicht ist.

Selbst wenn U während der ganzen weiteren Zählperiode auf »1« bliebe, würde wegen $Q=0$ der Hilfskippstufe 4h in Verbindung mit dem UND-Glied 36 der zweite Frequenzteiler 3 nun stets durch 4 teilen.

Durch passende Wahl der Signale 731 bis 74p des Programmiernetzwerkes 7 kann auf die genannte Weise der Frequenzteiler mit ganzzahligem Divisor beispielsweise durch 62 teilen. Ist jedoch das Umschaltsignal auf »0« gesetzt, so würde bei gleichen Signalen 731 bis 74p des Programmiernetzwerkes 7 der Frequenzteiler durch 63 teilen. Das ist in Tabelle 4 ab der willkürlich gewählten Takt-Nr. 11 dargestellt.

Bei Takt Nr. 11 mögen alle Stufen die gleiche Anfangsstellung haben wie beim vorhergehenden Beispiel bei Takt Nr. 1, d. h. sämtliche Frequenzteilerstufen haben an ihren Q-Ausgängen die logische

8

»1«, die Hilfskippstufe 4h steht wieder auf »0« und das Umschaltsignal U hat diesmal einen niedrigen Pegel, also »0«.

Bis zum Takt Nr. 13 entsprechen sich die zu Takt 1 bis 3 genannten Vorgänge. Mit $Q = 0$ bzw. $\bar{Q} = 1$ der Stufe 31 und 43h auf »1« gibt jedoch das NAND-Glied 36 wegen $U = 0$ am Ausgang »1« ab. Dieses Signal bewirkt mit $\bar{Q} = 1$ der Stufe 32 eine »0« am D-Eingang der Stufe 31. Der D-Eingang der Stufe 32 erhält über $\bar{Q}$ der Stufe 31 eine »1«. Folglich wird bei Takt Nr. 14 der neue Zustand der Stufe 31 eine logische »0« und der der Stufe 32 eine logische »1«. Nachdem nun $\bar{Q}$ der Stufe 32 wieder »0« ist, gibt das NAND-Glied 33 eine »1« ab, so daß erst bei Takt Nr. 15 sämtliche Stufen 31, 32 und 4h an ihren Q-Ausgängen auf »1« sind. Damit werden alle Stufen, wie bereits zu Takt 4 erläutert, auf den vom Programmiernetzwerk 7 bestimmten Zustand gesetzt, was ein Vergleich der Zeilen zu Takt 4 und Takt 5 in Tabelle 4 zeigt. Erfindungsgemäß ist jedoch diesmal ein Zähltakt mehr erforderlich gewesen, um zum gleichen Stufenzustand zu gelangen.

Die weiteren Takte 16 bis 20 zeigen, daß nun die Frequenzteiler 3 und 4 mit ganzzahligem Divisor wie üblich weiterzählen, bis zum bereits unter Takt Nr. 11 gezeigten Zustand. Der Frequenzteiler teilt also für $U = 0$ in diesem Beispiel durch 63.

Aus Tabelle 4 ist auch leicht entnehmbar, daß nur während der ersten 4 Takte das Umschaltsignal U erforderlichenfalls auf »1« gesetzt sein muß, also dann, wenn Stufe 31 zum erstenmal »0« wird. Für den Rest der Teilperiode kann $U = 0$ sein.

Zur Aufwandsersparnis für den Tongenerator wurde das Gewichtsnetzwerk, welches zur Bildung der stufenförmigen Signale mit angenäherter Sinuswellenform dient, vereinfacht und gleichzeitig hinsichtlich der Störanfälligkeit verbessert. Hierzu ist das erfindungsgemäße Gewichtsnetzwerk, welches die sinusförmige 12stufige Treppenkurve erzeugt, mit nur 3 Stromquellen ausgelegt, welche Teilströme im Verhältnis $1 : \sqrt{3} : (3 + \sqrt{3})$ liefern.

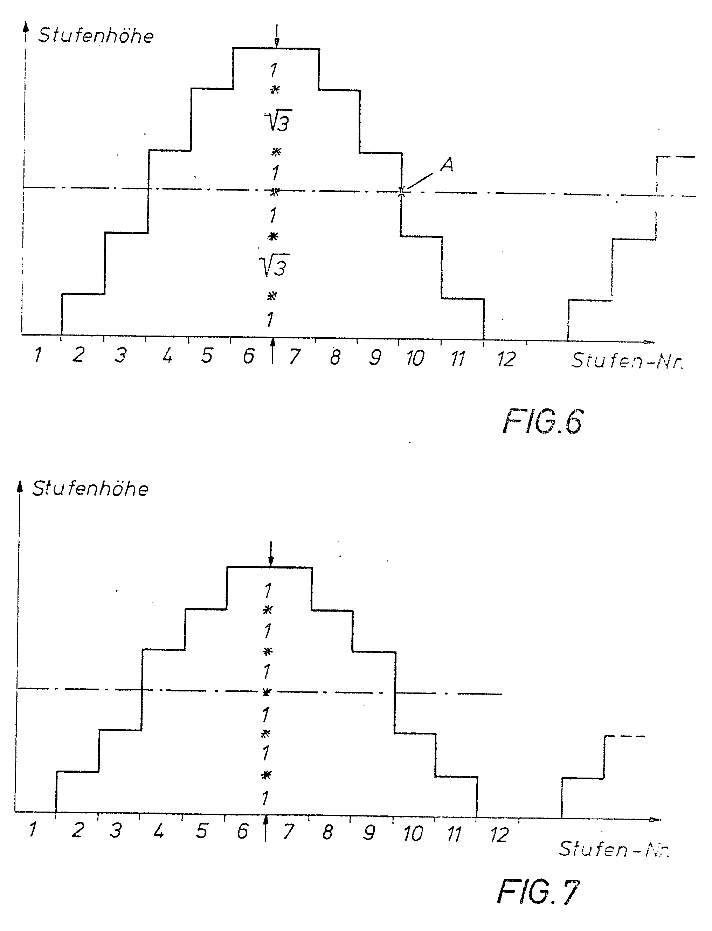

Fig. 6 und Tabelle 5 zeigen den an sich aus der Stromrichtertechnik bekannten Aufbau der Treppenkurve.

Tabelle 5

| Nr. | 1 | $\sqrt{3}$ | $3 + \sqrt{3}$ | Stufenhöhe/$\times$ |
|---|---|---|---|---|
| 1 | 0 | 0 | 0 | 0 |
| 2 | 1 | 0 | 0 | 1 |
| 3 | 1 | 1 | 0 | $1 + \sqrt{3}$ |
| 4 | 0 | 0 | 1 | $3 + \sqrt{3}$ |
| 5 | 0 | 1 | 1 | $3 + 2\sqrt{3}$ |
| 6 | 1 | 1 | 1 | $4 + 2\sqrt{3}$ |
| 7 | 1 | 1 | 1 | $4 + 2\sqrt{3}$ |
| 8 | 0 | 1 | 1 | $3 + 2\sqrt{3}$ |
| 9 | 0 | 0 | 1 | $3 + \sqrt{3}$ |
| 10 | 1 | 1 | 0 | $1 + \sqrt{3}$ |
| 11 | 1 | 0 | 0 | 1 |
| 12 | 0 | 0 | 0 | 0 |

In der ersten Spalte der Tabelle 5 ist die Stufennummer und in den folgenden drei Spalten die logischen Zustände der drei Teilstromquellen angegeben. Eine logische »0« bedeutet, daß die betreffende Teilstromquelle abgeschaltet und eine logische »1«, daß sie eingeschaltet ist. Spalte 4 zeigt schließlich die durch Aufsummieren der Teilströme der jeweils eingeschalteten Teilstromquellen sich ergebenden Stufenhöhen, die in Fig. 6 in Abhängigkeit von der Stufennummer graphisch dargestellt sind.

In Fig. 7 ist gezeigt, welche Folgen es hat, wenn infolge eines Fehlers beispielsweise der den Stromwert $\sqrt{3}$ liefernde Stromgenerator nur einen Stromwert der Größe 1 liefert. Wie ersichtlich, bleibt in vorteilhafter Weise die entstehende Treppenkurve stets rotationssymmetrisch um den Punkt A.

Die entstehenden Treppenkurven sind folglich stets frei von zweiten Oberwellen und symmetrisch um den Gleichstrommittelwert.

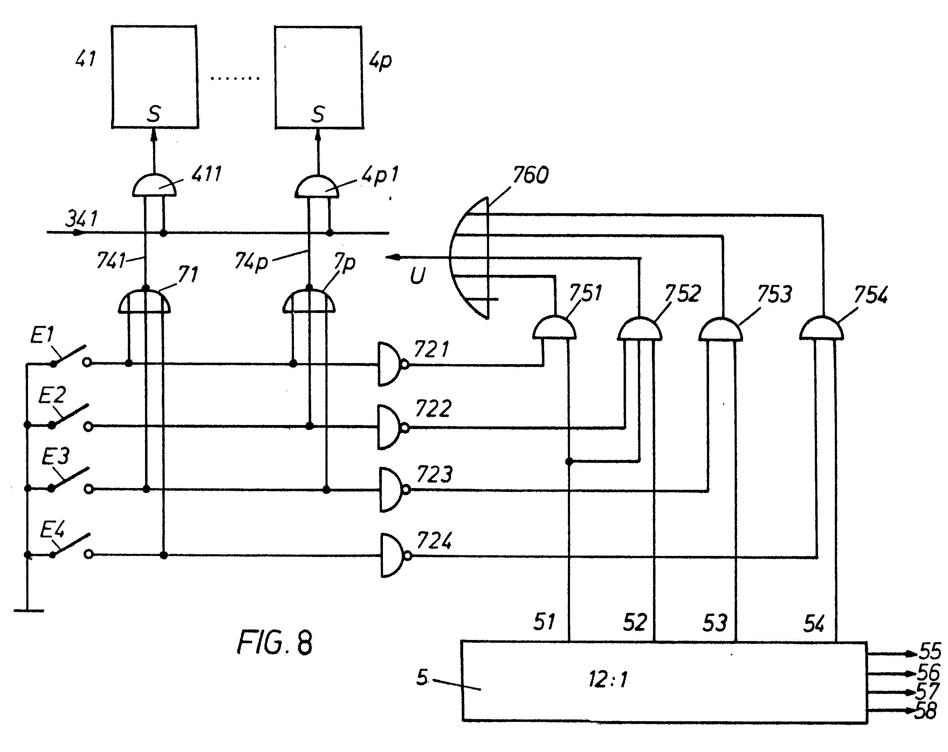

Das Programmiernetzwerk 7 ist in Fig. 8 vereinfacht dargestellt. Das einer Tonwahlfrequenz entsprechende Frequenzteilerverhältnis wird durch Schließen jeweils eines der Kontakte E1 bis E4 der Nummerntasten des MFV-Fernsprechapparates eingestellt. Das Schließen des Kontaktes E2 läßt an bestimmten NOR-Gliedern, beispielsweise am NOR-Glied 7p eine »1« erscheinen. Dieses Signal setzt über die bereits beschriebene Leitung 74p zusammen mit einer »1« auf Leitung 341 die Kippstufe 4p auf Q = 1. Ebenso werden die anderen nicht gezeigten Kippstufen zur Erzielung eines aus Tabelle 1 entnehmbaren Divisor A eingestellt. Zur Gewinnung des Umschaltsignals U für die um einen Takt verkürzten Treppenstufen des sinusförmigen Signals gemäß Fig. 6 hat der durch 12 teilende Frequenzteiler 5 an jeder Stufe einen Abgriff. Diese sind über die Leitungen 51 bis 54 mit UND-Gliedern 751 bis 754 verbunden. Die UND-Glieder haben jeweils mindestens 2 Eingänge, von denen jeweils der eine Eingang über einen Inverter 721 bis 724 mit einem der Kontakte E1 bis E4 verbunden ist. Die Ausgangssignale der UND-Glieder 751 bis 754 sind einem ODER-Glied 760 zugeführt. Dessen Ausgangssignal wird als Umschaltsignal U für die zweite Teilerstufe 3 verwendet.

Wird beispielsweise der Kontakt E2 geschlossen, so gibt das UND-Glied 752 und damit das ODER-Glied 760 stets dann ein Signal »1« ab, wenn die den Leitungen 51 und 52 zugeordneten ersten beiden Stufen des durch 12 teilenden Frequenzteilers auf »1« stehen. Das Umschaltsignal U = 1 bewirkt dann für die Zählschaltung, bei denen die Signale der Leitungen 51 und 52 auf »1« liegen, die gewünschte Verkürzung der Zählperiode des zweiten Frequenzteilers 3 um einen Takt.

Durch die genannten Maßnahmen hat ein Tongenerator gemäß der Erfindung den großen Vorteil, daß er trotz des Mehraufwandes von einer Hilfskippstufe und einem UND-Glied einen Stromverbrauch von etwa 2 mA pro Frequenzteiler erfordert, d. h. für beide Frequenzteiler eines Tonwahlsenders mit einem Frequenzteiler gemäß der Erfindung sind lediglich 4 mA erforderlich.

Durch weitere zwei UND-Glieder 33 und 36 in Fig. 2 bzw. 33 und 360 in Fig. 3 sowie durch etwa 8 Gatter im Programmiernetzwerk 7 zur Erzeugung der Interpolationsmuster liegen die Frequenzabweichungen unter 1‰. Die erfindungsgemäße Schaltungsanordnung ist frei von Phasenjitter am Ausgang und der Einfluß auf nichtlineare Verzerrungen ist äußerst gering.

## Patentansprüche

1. Tongenerator zur Erzeugung von Signalisierungsfrequenzen in einem MFV-Fernsprechapparat mit einem Quarzoszillator (1), einem an den Quarzoszillator (1) angeschlossenen ersten Frequenzteiler (2) mit festem Divisor, einem am ersten Frequenzteiler (2) angeschlossenen Frequenzteiler (3, 4) mit von einem Programmiernetzwerk (7) einstellbaren ganzzahligen Divisor zur Erzeugung von über das Programmiernetzwerk (7) ausgewählten Frequenzen und mit einem Digital/Analog-Umsetzer, der einen vierten Frequenzteiler (5) mit einem festen Divisor und ein an die Stufen des vierten Frequenzteilers (5) angeschlossenes Gewichtsnetzwerk (6) zur Bildung stufenförmiger Signale mit angenäherter Sinuswellenform enthält, dadurch gekennzeichnet, daß der Frequenzteiler (3, 4) mit einstellbarem ganzzahligen Divisor ein UND-Glied (37) und als letzte Stufe eine Hilfskippstufe (4h) enthält, daß der Ausgang der Hilfskippstufe (4h über 43h) mit einem ersten Eingang des UND-Gliedes (37) verbunden ist, daß mindestens ein weiterer Eingang des UND-Gliedes (37) an dem Ausgang einer der Hilfskippstufe (4h) vorangehenden Teilerstufe (31, 32) angeschlossen ist und daß der Ausgang des UND-Gliedes (37 über 341) mit dem Reset-Eingang der Hilfskippstufe (4h) und vom Programmiernetzwerk (7 über 731, 732, 741, . . ., 74p) steuerbar mit dem Set- oder Reset-Eingang mindestens einer der Hilfskippstufe (4h) vorausgehenden Teilerstufe (31, 32, 41, . . ., 4p) verbunden ist.

2. Tongenerator nach Anspruch 1, dadurch gekennzeichnet, daß der Frequenzteiler (3, 4) mit einstellbarem ganzzahligen Divisor aus einem zweiten, zwischen den Divisoren 3 und 4 durch eine Umschaltleitung (U) umschaltbaren Frequenzteiler (3) und einem dritten, als letzte Stufe die Hilfskippstufe (4h) enthaltenden Frequenzteiler (4) besteht.

3. Tongenerator nach Anspruch 2, dadurch gekennzeichnet, daß der zweite Frequenzteiler (3) aus zwei aufeinanderfolgenden bistabilen Kippstufen mit Bedingungseingang D (D-Flip-Flops 31 und 32) besteht, bei denen der D-Eingang des zweiten Flip-Flops (32) mit dem invertierenden Ausgang des ersten Flip-Flops (31) und beide Takteingänge miteinander verbunden sind, daß zwischen dem D-Eingang des ersten Flip-Flops (31) und dem invertierenden Ausgang des zweiten Flip-Flops (32) ein erstes NAND-Glied (33) geschaltet ist, dessen Ausgang mit dem D-Eingang des ersten Flip-Flops (31) und dessen erster Eingang mit dem invertierenden Ausgang des zweiten Flip-Flops (32) verbunden ist und daß zwischen dem invertierenden Ausgang des ersten Flip-Flops (31) und dem ersten NAND-Glied (33) ein zweites NAND-Glied (36) geschaltet ist, dessen Ausgang mit dem zweiten Eingang des ersten NAND-Gliedes (33), dessen erster Eingang mit dem invertierenden Ausgang des ersten Flip-Flops (31) und dessen zweiter Eingang mit der Umschaltleitung (U) verbunden ist.

4. Tongenerator nach Anspruch 3, dadurch gekennzeichnet, daß zwischen dem Ausgang des UND-Gliedes (37) und den zu Set- oder Reset-Eingängen vorangehender Teilerstufen führenden

**0 021 296**

Leitungen weitere UND-Glieder (311, 321; 411, . . ., 4p1) geschaltet sind, deren zweite Eingänge mit Ausgängen des Programmiernetzwerkes (7) verbunden sind.

5. Tongenerator nach Anspruch 3 und 4, dadurch gekennzeichnet, daß das zweite NAND-Glied (36) einen dritten Eingang aufweist, der mit dem Ausgang der Hilfskippstufe (4h über 43h) des dritten Frequenzteilers (4) verbunden ist.

6. Tongenerator nach einem der vorangehenden Ansprüche, dadurch gekennzeichnet, daß das Gewichtsnetzwerk (6) drei Stromquellen aufweist, welche Teilströme im Verhältnis $1 : \sqrt{3} : (3+\sqrt{3})$ liefern.

**Claims**

1. Frequency generator for generating signalling frequencies in a multifrequency telephone apparatus comprising a quartz oscillator (1); a first frequency divider (2) which is connected to the quartz oscillator (1) and has a fixed divisor; a frequency divider (3, 4) which is connected to the first frequency divider (2) and has an integral divisor which can be set by a programming network (7) for generating frequencies selected through the programming network (7); and a digital/analog converter comprising a fourth frequency divider (5) with a fixed divisor, and a weight network (6) connected to the steps of the fourth frequency divider (5) for forming step-shaped signals of approximate sine waveform; characterized in that the frequency divider (3, 4) with a settable integral divisor comprises and AND member (37) and an auxiliary flip-flop (4) as last step; in that the output of the flip-flop (4h via 43h) is connected to a first input of the AND member (37); in that at least one further input of the AND member (37) is connected to the output of a divider step (31, 32) preceding the auxiliary flip-flop (4h); and in that the output of the AND member (37 via 341) is connected to the reset input of the auxiliary flip-flop (4h), and, controlled by the programming network (7 via 731, 732, 741, . . ., 74p), to the set or reset input of at least one divider step (31, 32, 41, . . ., 4p) preceding the auxiliary flip-flop (4h).

2. Frequency generator as defined in claim 1, characterized in that the frequency divider (3, 4) with a settable integral divisor consists of a second frequency divider (3) which can be switched over between the divisor 3 and 4 by a switch-over line (U), and a third frequency divider (4) containing the auxiliary flip-flop (4h) as last step.

3. Frequency generator as defined in claim 2, characterized in that the second frequency divider (3) consists of two sequential bistable flip-flops with a condition input D (D flip-flops 31 and 32), with the D input of the second flip-flop (32) connected to the inverting output of the first flip-flop (31) and both pulse inputs connected to each other; in that there is connected between the D input of the first flip-flop (31) and the inverting output of the second flip-flop (32) a first NAND member (33) whose output is connected to the D input of the first flip-flops (31) and whose first input is connected to the inverting output of the second flip-flop (32); and in that there is connected between the inverting output of the first flip-flop (31) and the first NAND member (33) a second NAND member (36) with its output connected to the second input of the first NAND member (33), its first input to the inverting output of the first flip-flop (31), and its second input to the switch-over line (U).

4. Frequency generator as defined in claim 3, characterized in that there are connected between the output of the AND member (37) and the lines leading to set or reset inputs of preceding divider steps further AND members (311, 321; 411, . . ., 4p1) whose second inputs are connected to outputs of the programming network (7).

5. Frequency generator as defined in claims 3 and 4, characterized in that the second NAND member (36) has a third input which is connected to the output of the auxiliary flip-flop (4h via 43h) of the third frequency divider (4).

6. Frequency generator as defined in one of the preceding claims, characterized in that the weight network (6) has three current sources which provide component currents in the ratio of $1 : \sqrt{3} : (3+\sqrt{3})$.

**Revendications**

1. Générateur de son en vue de produire des fréquences de signalisation dans un appareil téléphonique fonctionnant selon le procédé de sélection par code à fréquences multiples, ce générateur comportant un oscillateur à quartz (1), un premier diviseur de fréquence (2) raccordé à l'oscillateur à quartz (1) et comportant un diviseur fixe, un diviseur de fréquence (3, 4) raccordé au premier diviseur de fréquence (2) et ayant un diviseur à nombre entier réglable par un réseau de programmation (7) en vue de produire des fréquences sélectionnées par le réseau de programmation (7), ainsi qu'un convertisseur numérique/analogique qui comporte un quatrième diviseur de fréquence (5) à diviseur fixe, ainsi qu'un réseau de pondération (6) raccordé aux étages du quatrième diviseur de fréquence (5) en vue de former des signaux étagés ayant à peu près une forme d'onde sinusoïdale, caractérisé en ce que le diviseur de fréquence (3, 4) comportant un diviseur à nombre entier réglable comprend une porte ET (37) et, comme dernier étage, un étage de relaxation auxiliaire (4h), la sortie de l'étage de relaxation auxiliaire (4h via 43h) est raccordée à une première entrée de la porte ET (37), au

11

moins une autre entrée de la porte ET (37) est raccordée à la sortie d'un étage diviseur (31, 32) précédant l'étage de relaxation auxiliaire (4h) et la sortie de la porte ET (37 via 341) est raccordée à l'entrée de remise à zéro de l'étage de relaxation auxiliaire (4h) et, sous la commande du réseau de programmation (7 via 731, 732, 741, . . ., 74p), à l'entrée de positionnement ou de remise à zéro d'au moins un étage diviseur (31, 32, 41, . . ., 4p) précédant l'étage de relaxation auxiliaire (4h).

2. Générateur de son suivant la revendication 1, caractérisé en ce que le diviseur de fréquence (3, 4) comportant un diviseur à nombre entier réglable comprend un deuxième diviseur de fréquence (3) pouvant être commuté entre les diviseurs (3 et 4) au moyen d'une ligne de commutation (U), ainsi qu'un troisième diviseur de fréquence (4) comportant, comme dernier étage, l'étage de relaxation auxiliaire (4h).

3. Générateur de son suivant la revendication 2, caractérisé en ce que le deuxième diviseur de fréquence (3) est constitué de deux étages de relaxation bistables successifs comportant une entrée de condition D (bascules D 31 et 32) dans lesquels l'entrée D de la deuxième bascule (32) est raccordée à la sortie d'inversion de la première bascule (31), les deux entrées de rythme étant raccordées l'une à l'autre tandis que, entre l'entrée D de la première bascule (31) et la sortie d'inversion de la deuxième bascule (32), est montée une première porte NON-ET (33) dont la sortie est raccordée à l'entrée D de la première bascule (31) et dont la première entrée est raccordée à la sortie d'inversion de la deuxième bascule (32) et, entre la sortie d'inversion de la première bascule (31) et la première porte NON-ET (33), est montée une deuxième porte NON-ET (36) dont la sortie est raccordée à la deuxième entrée de la première porte NON-ET (33), sa première entrée étant raccordée à la sortie d'inversion de la première bascule (31), tandis que sa deuxième entrée est raccordée à la ligne de commutation (U).

4. Générateur de son suivant la revendication 3, caractérisé en ce que, entre la sortie de la porte ET (37) et les lignes allant à des étages diviseurs précédant des entrées de positionnement ou de remise à zéro, sont montées d'autres portes ET (311, 321; 411, . . ., 4p1) dont les deuxièmes entrées sont raccordées aux sorties du réseau de programmation (7).

5. Générateur de son suivant les revendications 3 et 4, caractérisé en ce que la deuxième porte NON-ET (36) comporte une troisième entrée qui est raccordée à la sortie de l'étage de relaxation auxiliaire (4h via 43h) du troisième diviseur de fréquence (4).

6. Générateur de son suivant une des revendications précédentes, caractérisé en ce que le réseau de pondération (6) comporte trois sources de courant fournissant des courants partiels dans le rapport de $1 : \sqrt{3} : (3+\sqrt{3})$.

FIG. 1

FIG.2

FIG.3

FIG.4

FIG. 5

FIG.6

FIG.7

19

FIG. 8

0 021 296